# EUROPEAN PATENT SPECIFICATION

(11) **EP 2 028 165 B1**
(45) Date of publication and mention of the grant of the patent: **22.05.2013**
(21) Application number: 08013295.4
(22) Date of filing: 23.07.2008
(51) Int. Cl.: C03B 37/029

(54) **A furnace for fabricating a glass preform or an optical fiber**
Ofen zur Herstellung einer Glasvorform oder einer Glasfaser
Four pour fabriquer une préforme de verre ou une fibre optique

(30) Priority: 24.07.2007 JP 2007191694
(43) Date of publication of application: 25.02.2009
(73) Proprietor: Shin-Etsu Chemical Co., Ltd., Tokyo 100-0004 (JP)
(72) Inventor: Otosaka, Tetsuya, Annaka-shi Gunma 379-0195 (JP)
(74) Representative: Kramer - Barske - Schmidtchen

(56) References cited:
- DE-A1- 3 903 466
- DE-A1- 4 006 839
- JP-A- 2007 070 189
- US-A1- 2006 280 578

## Description

### BACKGROUND OF THE INVENTION

### Field of the Invention

The invention relates to a furnace used for heating a preform in a sintering process to transparently vitrify a porous glass preform, a drawing process to reduce the diameter of a glass preform and a process for making an optical fiber from a glass preform.

### Description of the Related Art

An optical fiber is fabricated through several processes. First, a process of depositing glass particles1 onto a core rod, as a starting material, is conducted to produce a porous glass preform. Next, the porous glass perform is heated so as to sinter the perform and produce a transparently vitrified glass preform. Next, a heating and drawing of the glass perform to reduce its outer diameter is performed to produce a glass preform having an outer diameter suitable for drawing an optical fiber. Finally, a distal end of the glass preform is heated and melted so as to provide a pre-adjusted outer diameter and an optical fiber is drawn from the distal end in a furnace so as to produce an optical fiber.

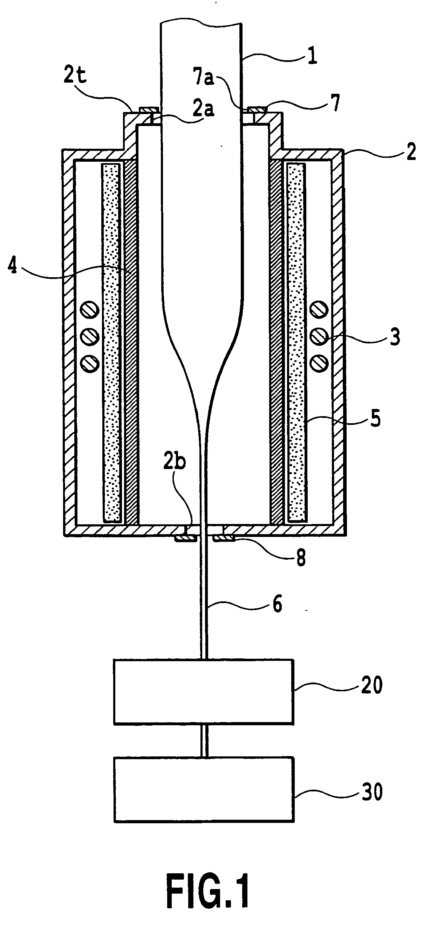

An explanation of a conventional method of drawing an optical fiber will be given with reference to Fig. 1. As shown in Fig. 1, a glass preform 1 is heated while hung in a furnace 2. The furnace 2 uses induction heating as a heating method. That is, the furnace 2 has a furnace core tube 4 with a coil 3 wound around the tube 4. The furnace core tube 4 is induction-heated by supplying the coil 3 with a high frequency current so as to heat a glass preform 1. Here, a heat shield 5 is arranged between the coil 3 and the furnace core tube 4. The glass preform 1 is heated to a temperature of about 2000 degrees C, i.e. immensely-high, so that a carbon is generally used for a material of the furnace core tube 4. To prevent the carbon from erosion by its oxidization, the interior of the furnace 2 is maintained with an inert gas atmosphere such as argon gas, helium gas or the like.

The glass preform 1 is subject to radiation heat of the furnace core tube 4 so as to be heated, melted, and then drawn down as an optical fiber. A drawn optical fiber 6 is coated with a resin by a resin coating device 20, and then taken up to a bobbin by a winding device 30.

In addition, a clearance gap between a glass preform insertion opening 2a disposed at an upper end 2t of the furnace 2 and the glass preform 1 is sealed with an annular sealing disk 7 having a hole 7a with an inner diameter slightly greater than the outer diameter of the glass preform 1. On the other hand, a clearance gap between an insertion opening 2b for an optical fiber 6, disposed at a bottom end of the furnace 2, and the optical fiber 6 is sealed with an iris 8 with an adjustable inner diameter.

The outer diameter of the optical fiber 6, to be drawn, is generally controlled within 125 ± 1 µm, so that the clearance gap between the optical fiber 6 and the iris 8 is substantially constant. While at the top end of the furnace 2, a clearance gap between the optical fiber 6 and the glass preform 1 can be significantly changed in size in response to a fluctuation of the outer diameter of the glass preform 1 when drawing the optical fiber 6. The fluctuation of the size of the clearance gap causes a change of the flow of the inert gas so that it becomes difficult to control the outer diameter of the optical fiber 6. Further, when the clearance gap becomes bigger in size than a predetermined value, outside air flows into the inside of the furnace 2 and a carbon part at a high temperature, such as the furnace core tube 4, is eroded by oxidization. As a result, dust from an eroded portion adheres to a melted portion of the glass preform 1. The adhered dust causes a localized fluctuation of the outer diameter and localized embrittlement of the optical fiber 5, as well as a decrease in the life of the carbon part in the furnace 2.

To prevent this problem from occurring, a fine adjustment of the outer diameter of the glass preform 1 to make it uniform in the longitudinal direction is required. However, in fabrication methods of optical fiber glass preforms by a sintering process, such as a Vapor-phase Axial Deposition (VAD) process or an Outside Vapor Deposition (OVD) process, a fluctuation of an outer diameter of a porous glass preform usually occurs because of a lack of balance between a shrinking force caused by sintering and a gravitational force due to its own mass in the longitudinal direction of the porous glass preform.

To avoid that problem, Japanese Patent Laid-open No. 2005-8452 (corresponding to International Publication Number WO2004/110941 discloses a method of transparently vitrifying a porous glass preform which comprises monitoring the amount of expansion and contraction of a porous glass preform to control a sintering condition during sintering of the porous glass preform.

However, in this method, a core rod as a core of the porous glass preform is required in which the outer diameter is pre-adjusted in the longitudinal direction based on a pre-consideration of an expansion and contraction of the porous glass preform. Additionally, when depositing soot onto a periphery, an adjustment of the amount of soot to deposit onto the core rod is required in response to the diameter of the core rod along the entire longitudinal direction. As a result, in fabricating a glass preform by this method, numerous processes are needed.

Further, if a glass preform is drawn with a smaller diameter and has a fluctuation in the outer diameter in the longitudinal direction, especially near the beginning and ending of drawing of the glass preform, a finished outer diameter of the glass preform might have large fluctations. The portion(s) where the outer diameter of the glass preform significantly fluctuates is not available for drawing an optical fiber, so that it is unavoidable to cut off and remove the portions.

To reduce such a waste of a glass preform and enable use of even a glass preform having a relatively large fluctuation in the longitudinal direction, a method capable of effectively sealing a clearance gap between a furnace and a glass preform has been proposed.

For example, Japanese Patent Laid-open No. 2006-342030 (corresponding to US 2006/280578A1) discloses a sealing method which comprises pushing a sealing ring, formed of a combination of an inner ring and an outer ring respectively configured with a plurality of mutually connected seal ring fragments, onto a surface of glass preform with elastic springs arranged on a periphery of the outer ring.

However, in this method, to move equally each seal ring fragment in response to a fluctuation of the outer diameter of the glass preform in the longitudinal direction, a fine machining of the seal ring fragments is required.

Furthermore, when combining the inner ring and the outer ring, the height of a single sealing ring is too short to provide sufficient sealing efficiency. To improve the sealing efficiency, it is necessary to stack up a plurality of the sealing rings.

However, when stacking up a plurality of the sealing rings, the entire body of the sealing rings becomes considerably heavy. As a result, when drawing an optical fiber, movement of the glass preform in X and Y directions is required to adjust a position of an optical fiber in the center of an outer diameter measurement device. If the entire body of the sealing rings is too heavy, the sealing rings can not smoothly respond and it becomes difficult to control sliding the position of the glass preform.

Japanese Patent Laid-open No. 2007-70189 discloses a sealing method that uses a donut-like brush made of carbon fibers. According to this method there is no need for fine machining as described above, the donut-like brush can be relatively light, and an excellent sealing efficiency can be obtained.

However, the carbon fibers forming the brush might fall off and adhere onto the surface of the glass preform. As a result, the strength of the optical fiber might degrade.

The problem described above regarding the sealing of the clearance gap between the preform insertion opening and the preform to be processed at the top end of the furnace caused by the fluctuation of the outer diameter of the glass preform in the longitudinal direction is not only a peculiar problem when drawing an optical fiber from a glass preform but is also a problem when transparently vitrifying a porous preform by sintering and when adjusting an outer diameter of a glass preform by heating and drawing it.

DE 39 03 466 A1 relates to a furnace for the interior coating of optical fiber preforms.

JP 2007-070189 A relates to an optical fiber drawing apparatus and a method of sealing a drawing furnace.

US 2006/0280578 A1 discloses an optical fiber drawing apparatus, comprising a furnace tube in which a drawing-preform is inserted, a heater for heating the inserted drawing-preform, an upper seal ring for preventing a gas from leaking outside the furnace tube, and an expansion mechanism for pressing the upper seal ring in a center direction, provided at an outer periphery of the upper seal ring.

### SUMMARY OF THE INVENTION

It is an object of the present invention is to provide a furnace for heating an optical fiber preform, such as a porous glass preform and a transparently vitrified glass preform, which includes a sealing structure capable of effectively sealing a clearance gap between a preform insertion opening at a top end of the furnace and the optical fiber preform to be heated in the furnace.

The present invention provides a furnace for heating an optical fiber preform to be inserted from its insertion opening, the furnace includes an annular sealing body for sealing a clearance gap between the optical fiber preform and the insertion opening, the annular sealing body consisting of a plurality of identical annular disks mutually piled/stacked up, each of the plurality of annular disks has an insertion hole in its central area, a plurality of slits formed from an inner edge of the insertion hole toward its periphery and a plurality of flexible portions that are defined by the plurality of slits and bend by an interference with the optical fiber preform to be inserted into the insertion hole, wherein each of said annular disks is formed from a highly oriented pyrolytic graphite sheet.

Further features of the present invention will become apparent from the following description of exemplary embodiments with reference to the attached drawings.

### BRIEF DESCRIPTION OF THE DRAWINGS

Fig. 1 is a schematic vertical sectional view of a furnace having a sealing structure according to a conventional art , in which annular disks are put on a top end thereof;

Fig. 2 is a schematic vertical sectional view of a furnace having a sealing structure according to an embodiment of the present invention;

Fig. 3 is a perspective view for illustrating a structure of an annular sealing body according to the embodiment of the present invention;

Fig. 4 is a schematic vertical sectional view of a furnace having a sealing structure according to another embodiment of the present invention, which is used in Example 1; and

Fig. 5 is a schematic vertical sectional view of a furnace used in Comparative Example 1, in which a donut disk-like brush is put on a top end thereof.

### DESCRIPTION OF THE EMBODIMENTS

An embodiment of the present invention will be described below in detail with reference to the attached drawings. In addition, an optical fiber preform heated in the furnace includes a porous glass preform transparently vitrified by sintering, a glass preform to be heated and drawn for a preliminary adjustment of its outer diameter prior to being changed to an optical fiber, and a glass preform to be changed to an optical fiber by being heated and drawn.

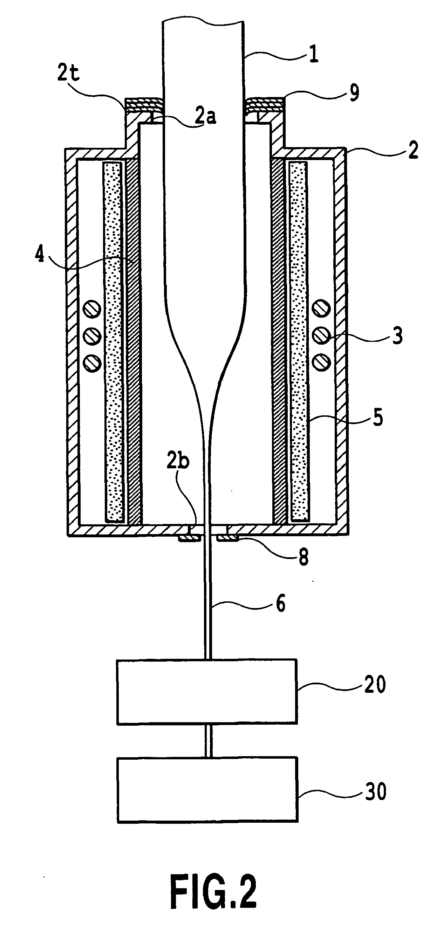

Fig. 2 is a schematic vertical sectional view of a furnace in which a sealing structure according to an embodiment of the present invention is sealing a clearance gap between a glass preform insertion opening and the glass preform. In addition, in Fig. 2, a reference numeral identical to that in Fig. 1 is used for a similar component as the furnace shown in Fig. 1.

An annular sealing body 9 is slidably disposed on a top end 2t of the furnace 2. The annular sealing body 9 seals a clearance gap between a glass preform insertion opening 2a and a glass preform 1.

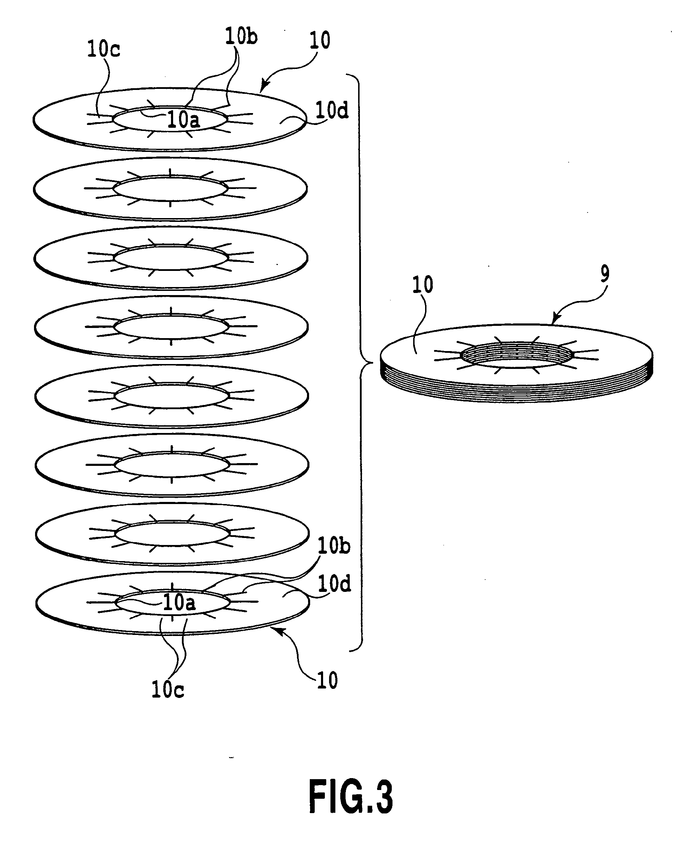

Fig. 3 illustrates an example of the structure of the annular sealing body 9.

The annular sealing body 9 is configured with a plurality of annular disks 10 having an insertion hole 10a in its central area. The plurality of annular disks 10 are mutually piled or stacked up on each other.

An annular disk 10 has a plurality of slits 10b which are formed to extend from a inner edge of the insertion hole 10a toward its periphery. Additionally, the annular disk 10 has a plurality of flexible portions 10c, which are defined by the plurality of slits 10b, so as to provided flexibility to the disk.

The slits in the annular disk 10, for example, are formed to extend from the inner edge of the insertion hole 10a in radial directions. The slits 10b, for example, are formed at regular angular intervals in the circumferential direction of the annular disk 10. However, the slits 10b are not limited to these examples.

The annular disk 10 is formed from a highly oriented pyrolytic graphite sheet.

The annular disks 10 have respectively identical structures in the example shown in Fig. 3. To improve the sealing efficiency, the annular disks are stacked such that the positions of the slits 10b in one of the annular disks 10 are different from that of the slits in the annular disk adjacent thereto, that is, the slits 10b of the annular disks 10 are not overlapped with each other.

The stacked annular disks 10 are integrated by fasten means such as clip fastener. It is not necessary to integrate the stacked annular disks about their entire circumference, also a structure can be employed so that several portions of the disks can be integrated in the circumference direction.

The insertion hole 10a of the annular disk 10 is formed so as to be smaller in diameter than the outer diameter of the glass preform 1. Therefore, when the glass preform 1 is inserted into the insertion hole 10a of each of the stacked annular disks 10, the respective flexible portions 10c bend due to an interference with the glass preform 1. In this situation, each of the flexible portions 10c responds to any fluctuation of the outer diameter of the glass preform 1, and the amount of deflection also fluctuates. As a result, a condition is established in which each of the flexible portions 10c is always in stable contacts with a surface of the glass preform 1, so that the annular clearance gap between the glass preform insertion opening 2a and the glass preform 1 is effectively sealed.

The larger the number of annular disk 10 for forming the annular sealing body 9, the higher the sealing efficiency of the annular sealing body 9.

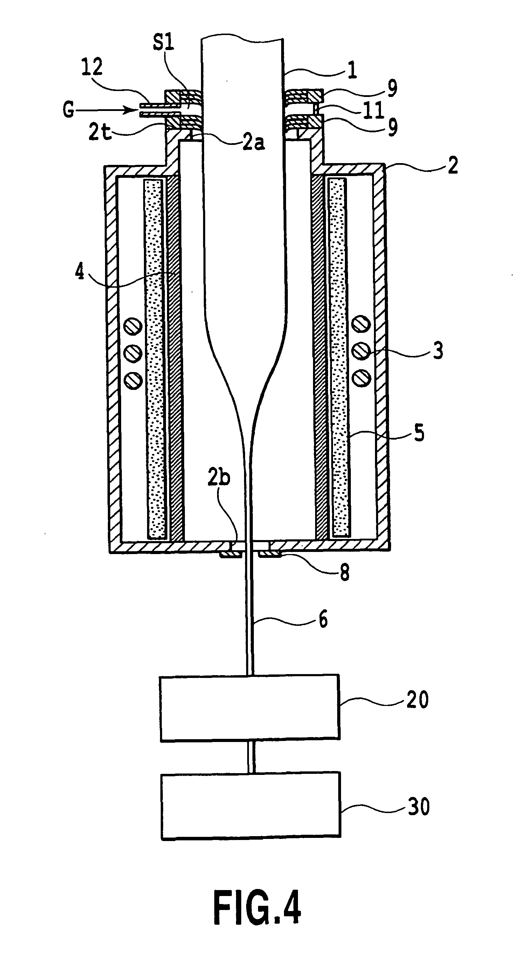

Fig. 4 illustrates a furnace having a sealing structure according to another embodiment of the present invention. Additionally, in Fig. 4, an identical reference numeral to that in Fig. 1 is used for a similar component as the furnace shown in Fig. 2.

As shown in Fig. 4, on the top end 2t of the furnace 2, two annular sealing bodies 9 are coaxially piled up in a longitudinal direction of the furnace 2.

A spacer 11 for forming a space S1 to be filled with an inert gas is disposed between the two annular sealing bodies 9.

The spacer 11 is provided with a gas inlet for feeding an inert gas G.

A furnace core tube 4 is heated to over 2000 degrees C. Therefore, if the clearance gap between the glass preform 1 and the preform insertion opening 2a is relatively large, the annular sealing body 9 is subject to a radiation heat from the furnace 2 and will be heated to a higher temperature. As a result, the annular carbon disks forming the annular sealing body 9 are oxidized by an oxide gas included in outside air and will erode.

To avoid this problem, in the present embodiment, by piling up two annular sealing bodies and feeding the inert gas G, such as argon and helium, through the gas inlet 12 therebetween, an external air flow into the furnace can be effectively blocked. As a result, erosion of the annular disks 10 on the lower side of the sealing body 9 that is caused by an oxide gas from a carbon material can be suppressed. Further, the annular sealing body 9 on the upper side is subject to light shielding and heat shielding, so that radiation heat to which the upper side annular sealing body 9 is subject can be reduced. Accordingly, erosion of the upper side annular disks 10 can also be suppressed.

By piling/stacking up additional annular sealing bodies 9, erosion resistance and sealing efficiency of the annular sealing body 9 can be effectively improved.

### Example 1

Ten glass preforms 1 having an average outer diameter of 64 mm and a fluctuation of its outer diameter within plus or minus 2 mm and a length of 1000 mm were heated by using the furnace 2 shown in Fig. 4, and an optical fiber was drawn from an end of the glass preform 1 that had been heated and melted.

At the preform insertion opening 2a of the furnace 2, the annular sealing bodies, which were made under the following condition, were piled up.

The annular disk 10 was made from a highly oriented pyrolytic graphite sheet with a thickness of 0.1 mm, of which the insertion hole 10a had a diameter of 60 mm. Twelve slits 10b with a length of 20 mm were formed in the annular disk 10 so as to extend from an inner edge of its insertion hole 10a in a radial direction at angular intervals of 30 degrees in the circumferential direction.

The annular sealing body 9 was made from eight annular disks 10 having a same structure were stacked, so that the annular disks lying next to each other were shifted by 15 degrees so as to prevent the slits 10b from being overlapped with each other.

An argon gas was fed from the inert gas inlet 12 into the space S1 between the annular sealing bodies 9 at a flow rate of 3 liters per minute.

After drawing an optical fiber, the thickness of the furnace core tube 4 at a topmost portion was measured. However, the measured thickness was not reduced, and a fluctuation of an outer diameter of the drawn optical fiber was within 125 µm plus or minus 0.5 µm i.e. precisely controlled. Further, the strength of the optical fiber was tested with a predetermined proof test. But, there was no breakage in the optical fiber. In the proof test, a predetermined load was applied to the optical fiber for a second so as to cause extension strain of 1.0 % over the entire length of the optical fiber.

### Comparative Example 1

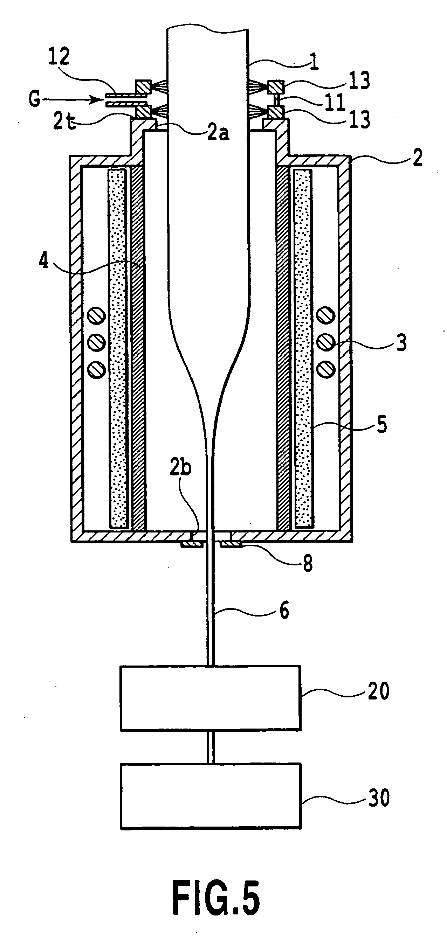

Ten glass preforms 1 having an average outer diameter of 64 mm and a fluctuation of its outer diameter within plus or minus 2 mm and a length of 1000 mm were heated by using the furnace 2 shown in Fig. 5, and an optical fiber was drawn from a heated and melted end of the glass preform 1. in Fig. 5, a reference numeral identical to that in Fig. 2 is used for a similar component shown in Fig. 2.

Donut disk-like brushes 13 were used for sealing the clearance gap between the top end 2t of the furnace 2 and the glass preform 1.

The donut disk-like brush 13 is configured with a ring part and hair materials with a length of 8 mm implanted around the inner circumferential surface of the ring part in the radial directions, and comprises an insertion opening with an inner diameter of 60 mm for the preform 1.

Argon gas was fed from the inert gas inlet 12 into a space between the donut disk-like brushes 13 at a flow rate of 3 liters per minute.

After drawing an optical fiber, the thickness of the furnace core tube 4 at a topmost portion was measured. However, the measured thickness was not reduced, and a fluctuation of the outer diameter of a drawn optical fiber was within 125 µm plus or minus 0.5 µm.
However, the strength of the optical fiber was tested by the predetermined proof test. There was a break at an average frequency of once every 120 km of the optical fiber.

In the embodiment described above, an explanation was made in case in which slits were formed in the radial direction of the annular disk, however, the present invention is not limited to this configuration. For example, a configuration in which the slits are formed in a direction inclined relative to a radial direction at a predetermined angle can be employed. In this case, by alternately turning the annular disks upside down to pile them up, it is possible to prevent the slits from being overlapped without a mutual alignment of the disks.

## Claims

1. A furnace (2) provided with an insertion opening (2a) for receiving an optical fiber preform (1) therein so as to be heated in the furnace (2), comprising:
an annular sealing body (9) configured to seal a clearance gap between said optical fiber perform (1) and said insertion opening (2a); said annular sealing body (9) consisting of a plurality of identical annular disks (10) mutually stacked on each other;
each of said plurality of annular disks (10) comprising:
an insertion hole (10a) in a central area of the disk;
a plurality of slits (10b) formed to extend from an inner edge of said insertion hole (10a) toward an outer periphery of the disk; and
a plurality of flexible portions (10c) defined by said plurality of slits (10b) and configured to bend due to an interference fit with said optical fiber preform (1) when said optical fiber preform (1) is inserted into said insertion hole (10a), wherein each of said annular disks (10) is formed from a highly

2. The furnace (2) according to claim 1, wherein said plurality of slits (10b) are formed at regular angular intervals in the circumferential direction of said annular disk (10).

3. The furnace (2) according to claim 1 or 2, wherein each of said slits (10b) is formed to extend from an inner edge of said insertion hole (10a) toward a radial direction of the disk.

4. The furnace (2) according to any one of claims 1 to 3, wherein each location of said slits (10b) in one of said annular disks (10) is different from that of said slits (10b) in an annular disk (10) adjacent thereto.

5. The furnace (2) according to claim 4, wherein said plurality of annular disks (10) respectively have an identical structure, and are piled up such that each location of said slits (10b) in one of annular disks (10) is different from that of said slits (10b) in the annular disk (10) adjacent thereto.

6. The furnace (2) according to any one of the claims 1 to 5, wherein the plurality of annular sealing bodies (9) are coaxially arranged, and
a spacer (11) defines a space (S1) between said annular sealing bodies (9) so as to receive an inert gas (G) therein.

## Patentansprüche

1. Ofen (2), der mit einer Einsetzöffnung (2a) zum Aufnehmen einer Lichtleitfaser-Vorform (1) darin ausgestattet ist, so dass sie in dem Ofen (2) erwärmt wird, umfassend:
einen ringförmigen Abdichtungskörper (9), der so ausgestaltet ist, dass er einen Spalt zwischen der Lichtleitfaser-Vorform (1) und der Einsetzöffnung (2a) abdichtet, wobei der ringförmige Abdichtungskörper (9) aus einer Mehrzahl von identischen ringförmigen Scheiben (10) besteht, die aufeinander gestapelt sind,
wobei jede der Mehrzahl von ringförmigen Scheiben (10) umfasst:
ein Einsetzloch (10a) in einem zentralen Bereich der Scheibe,
eine Mehrzahl von Schlitzen (10b), die so ausgebildet sind, dass sie sich von einer Innenkante des Einsetzlochs (10a) in die Richtung eines Außenumfangs der Scheibe erstrecken, und
eine Mehrzahl von flexiblen Abschnitten (10c), die durch die Mehrzahl von Schlitzen (10b) festgelegt sind und so ausgestaltet sind, dass sie sich aufgrund einer Presspassung mit der Lichtleitfaser-Vorform (1) biegen, wenn die Lichtleitfaser-Vorform (1) in das Einsetzloch (10a) eingesetzt ist, wobei jede der ringförmigen Scheiben (10) aus einer stark orientierten pyrolytischen Graphitlage ausgebildet ist.

2. Ofen (2) nach Anspruch 1, bei dem die Mehrzahl von Schlitzen (10b) in regelmäßigen Winkelabständen in der Umfangsrichtung der ringförmigen Scheibe (10) ausgebildet ist.

3. Ofen (2) nach Anspruch 1 oder 2, bei dem jeder der Schlitze (10b) so ausgebildet ist, dass er sich von einer Innenkante des Einsetzlochs (10a) zu einer radialen Richtung der Scheibe erstreckt.

4. Ofen (2) nach einem der Ansprüche 1 bis 3, bei dem sich jede Position der Schlitze (10b) in einer der ringförmigen Scheiben (10) von derjenigen der Schlitze (10b) in einer ringförmigen Scheibe (10), die daran angrenzt, unterscheidet.

5. Ofen (2) nach Anspruch 4, bei dem die Mehrzahl von ringförmigen Scheiben (10) jeweils eine identische Struktur aufweist und so gestapelt ist, dass sich jede Position der Schlitze (1 Ob) in einer der ringförmigen Scheiben (10) von derjenigen der Schlitze (10b) in der ringförmigen Scheibe (10), die daran angrenzt, unterscheidet.

6. Ofen (2) nach einem der Ansprüche 1 bis 5, bei dem die Mehrzahl von ringförmigen Abdichtungskörpern (9) koaxial angeordnet ist und
ein Abstandshalter (11) einen Raum (S1) zwischen den ringförmigen Abdichtungskörpern (9) derart festlegt, so dass ein Inertgas (G) darin aufgenommen werden kann.

## Revendications

1. Four (2) doté d'une ouverture d'insertion (2a) pour recevoir une préforme de fibre optique (1) à l'intérieur de ce dernier afin d'être chauffée dans le four (2), comprenant:
un corps d'étanchéité annulaire (9) configuré pour fermer hermétiquement un espace de jeu entre ladite préforme de fibre optique (1) et ladite ouverture d'insertion (2a); ledit corps d'étanchéité annulaire (9) se compose d'une pluralité de disques annulaires (10) identiques mutuellement empilés les uns sur les autres;
chacun de ladite pluralité de disques annulaires (10) comprenant:
un trou d'insertion (10a) dans une zone centrale du disque;
une pluralité de fentes (10b) formées pour s'étendre à partir d'un bord interne dudit trou d'insertion (10a) vers une périphérie externe du disque; et
une pluralité de parties flexibles (10c) définies par ladite pluralité de fentes (10b) et configurées pour se courber en raison d'un ajustement avec serrage avec ladite préforme de fibre optique (1) lorsque ladite préforme de fibre optique (1) est insérée dans ledit trou d'insertion (10a), dans lequel chacun desdits disques annulaires (10) est formé à partir d'une feuille de graphite pyrolytique hautement orientée.

2. Four (2) selon la revendication 1, dans lequel ladite pluralité de fentes (10b) sont formées à intervalles angulaires réguliers dans la direction circonférentielle dudit disque annulaire (10).

3. Four (2) selon la revendication 1 ou 2, dans lequel chacune desdites fentes (10b) est formée pour s'étendre à partir d'un bord interne dudit trou d'insertion (10a) vers une direction radiale du disque.

4. Four (2) selon l'une quelconque des revendications 1 à 3, dans lequel chaque emplacement desdites fentes (10b) dans l'un desdits disques annulaires (10) est différent de celui desdites fentes (10b) dans un disque annulaire (10) adjacent à ces derniers.

5. Four (2) selon la revendication 4, dans lequel ladite pluralité de disques annulaires (10) respectivement ont une structure identique et sont empilés de sorte que chaque emplacement desdites fentes (10b) dans l'un des disques annulaires (10) est différent de celui desdites fentes (10b) dans le disque annulaire (10) adjacent à ces derniers.

6. Four (2) selon l'une quelconque des revendications 1 à 5, dans lequel la pluralité de corps d'étanchéité annulaires (9) sont agencés de manière coaxiale, et
un dispositif d'espacement (11) définit un espace (S1) entre lesdits corps d'étanchéité annulaires (9) afin de recevoir un gaz inerte (G) à l'intérieur de ce dernier.
